# EUROPEAN PATENT SPECIFICATION

(11) **EP 0 760 596 B1**
(45) Date of publication and mention of the grant of the patent: **17.11.1999**
(21) Application number: 96902424.9
(22) Date of filing: 07.02.1996
(51) Int. Cl.: A01K 1/01

(54) **TOILET FOR DOGS**
HUNDETOILETTE
LIEU D'AISANCES POUR CHIENS

(30) Priority: 09.02.1995 IT IM950001 U
(43) Date of publication of application: 12.03.1997
(73) Proprietor: Brettone, Mariacristina, 18030 Latte Ventimiglia (IM) (IT)
(72) Inventor: Brettone, Mariacristina, 18030 Latte Ventimiglia (IM) (IT)
(86) International application number: IT9600023
(87) International publication number: WO9624324

(56) References cited:
- CH-A- 662 243
- DE-A- 2 658 140
- DE-C- 416 046
- DE-U- 8 610 560
- FR-A- 2 277 528
- FR-A- 2 313 898
- FR-A- 2 698 895
- FR-A- 2 701 972
- FR-A- 2 702 234

## Description

### Technical Field

There is a hygienic and aesthetic problem in cities for what concerns organic refuse (excrements and urine) of dogs and cats along sidewalks, on the edges of streets, in gardens and parks.

Therefore there is a daily problem of:
- precarious hygiene in public areas
- bad odours
- dirty and unpleasant sight in cities
- possible unfortunate mishaps for pedestrians
- inconvenience to custodians of dogs
- inconvenience to all residents.

There problems exist because cities do not have the right space to be used by animals for their physical needs.

Also for dog owners who have their own garden, the removal and elimination of refuse of this kind are a daily problem.

In order to find a solution to this problem, special basins have been devised. These containers can be put where animals are used to going and be used as toilets for dogs.

### Background Art

Existing techniques provide various kinds of containers; none of which however has the essential characteristics suitable for such a purpose. Various devices for solving the problem in question have been created, such as different types of dustpans for picking up the organic refuse of dogs, but they do not have anything in common with the model presented here.

Document DE-A-2658140 discloses a dog toilet for public and private use, which may be mobile or stationary, which does not necessarily require water or electrical hook ups and which can be positioned anywhere, said toilet being formed by a basin in rigid, resistant and water-repellent material, said basin having an internal bottom inclined towards a central hole for drainage connected to a tube, which allows the waste liquids to flow to a system for collecting waste waters, which may be an internal waste container or a public sewerage system. The main disadvantage of the DE-A-2658140 toilet are that the form of this toilet could obstruct the sliding of waters towards the drain wells and that the lack of sand or gravel causes it to be not stimulating for animals.

### Disclosure of Invention

The toilet for dogs which is being proposed has been studied for both public and private use. For what concerns public use, it will be put in places where animals are used to going, such as along sidewalks (in parking areas), in gardens, in parks, on public walks and in all places where it is considered necessary. As for private use the place for putting it is at the owner's discretion.

Custodians of dogs will have to lead their animals to the basins in order for them to carry out their physical needs.

This is made remarkably easy because of the fact that dogs are attracted by the odours left by their similars and by instinct they are given to leave their own mark on the place with their odours.

To satisfy the various requirements for space, the toilets will be produced in several sizes and shapes: square, rectangular, semi-circular, etc... Special consideration has been taken for the public use of these toilets for dogs. Foreseeing them being placed on public ground, an urbanistic study has been carried out so that the presence of these toilets will not cause any impediment whatsoever.

In a particular way the size of the parking spaces (where presumably the dog toilets would be placed) have been taken into consideration. The most common size it two meters, for which the basic model of the dog toilets for public use will be of two meters by two.

In order to guarantee that dogs use the toilets, their planning was born from research made on the habits, instincts and necessities of dogs.

The dog toilet presented hereby is made up of a basin in rigid, resistant and water-repellent material (as is PVC, polyethylene, fiberglass or other similar material).

This basin, the height of which is about 25 centimetres (only fixed measurement to be respected), has the internal bottom inclined towards a central hole for drainage, the purpose of which is to allow urine of the animals, the water for washing the basin and rain to flow towards the drainpipe.

At the end of the drainage hole, by means of hydraulic pipe fittings, a rubber tube is connected, the external end of which is fixed to a disinfection filter in order to sterilize the waste liquids. The special container of the filter (already available on the market) allows anchoring in a steady way the end of the tube onto the drain-pipe; this is useful so that the liquids do not spill out of the reservoir where the waste liquids are collected or that possible vandals cannot cause damage.

The drain-pipe is to be connected to the already existing system of collecting water, such as drain wells or, when these are lacking, to self-draining wells to be laid underground under the basins, or to a sewerage system. The drainage hole placed at the centre of the basin is protected on the surface by a metallic gridiron, the purpose of which is to prevent obturation of said hole by external elements.

The basins have been planned with wide openings in the base and with external spacer feet. The purpose is for not obstructing or impeding the downflow of rain water, waste water, street and courtyard washing water into the road drain wells whenever these basins are placed near the latter.

The internal bottom of these basins will be filled with appropriate fine gravel in order to allow dogs to carry out their physical necessities in all ambit which is compatible with their nature.

In order to prevent the scattering of gravel outside the basins, gravel-guard panels have been planned. These will be placed along the internal perimeter of the basin, except for a portion which can allow the entrance of the dogs into the basin.

These panels will be attached to the basin with a springing system which allows them to soften possible blows due to parking manoeuvres of cars or other causes.

In order to facilitate the urinating of adults male dogs, little pillars at the internal corners of the basin have been predisposed. Their right positioning does not allow any urine to spill out of the basin.

In order to guarantee greater hygiene and germicidal and bactericidal action, filters, which will be periodically impregnated with substance suitable for this purpose, will be placed on the drainage hole and under the urinal pillars. The structure has been studied to resist possible vandalism (dismantling, moving of the basin, removal of the various elements which it is made up of) and in order to avoid accidental displacements caused by blows. For this each element is fixed to the basin, and the basin is designed to be fastened to the ground. In any event, in case of necessity the basin is removable.

The base of the basin is composed of modules which can be assembled. This is to make transport easier, to make the structure stronger, and to allow the substitution of a single element which could possibly be damaged. For smaller-sized basins the idea of a monoelement is not excluded.

From an aesthetic point of view the dog toilet looks like a flower bed in bloom, in that the base will be made in colours of and/or with the resemblance to the material generally used in the elements of city decoration; while the grave-guard panel are decorated (with adhesives) with floral arboreal subjects.

The external aesthetic result will be like a pretty little flower bed which could be a help to the general beauty of the city and of the private gardens. In expectation of the fact that often the street paving or other possible bases of support for the basin are not always regular, it is possible to regulate the inclination and the stability of these using distance spacers to insert under the basin at the external corners.

For what concerns the removal of the excrements, various solutions can be adopted: to entrust the task to the present street cleaning services which must take care of this daily; or to delegate the task to the individual custodians of dogs.

In order to make the operation easier a dispensable can be attached to the toilet, that is: a dustpan for lifting the refuse (having a telescopic handle in order to reach where necessary), and a container for throwing it away in), the cover of which is lifted by stepping on a pedal, and in which there is a plastic sack having inside a product for degrading the organic refuse - used for toilets in campers - the purpose of which is to eliminate odours and dangerous bacteria. Afterwards, the workers of the street cleaning service will have to periodically collect the sack with the refuse and substitute it with a clean one. Attached to the container of waste there will be a little basin containing disinfecting liquid (to be reviewed at regular intervals) in which the dustpan used for the lifting of the refuse is to be inserted. This makes it possible to always keep the dustpan clean.

Another invention patent will be a special container for organic refuse of dogs to be connected to the toilets. This will be able to resolve automatically the degrading of the refuse, to guarantee the utmost hygiene, to be convenient to use and to limit the expense of labour of the street cleaning service.

The usual maintenance of these toilets foresees:
- periodic washing of the basins in order to guarantee greater hygiene and cleanliness. As to dog toilets for public use, this can be easily carried out by the street cleaning service which is already in possession of suitable mobile means.
- the replacing of the fine gravel contained in them, when it is lacking.
- the periodic distribution of disinfectant.
- periodic substitution of the depuration filters.

The advantages derived from the installation of dog toilets are:
- solving completely the problem of animal organic refuse, not only of excrements but also of urine.
- cleanliness of the ground is preserved, for public (sidewalks, streets, gardens and parks) and for private (gardens, vegetable gardens and yards), for which the hygiene in areas used privately and publicly is guaranteed.
- its aesthetic quality not only allows a pleasant insertion in the city and private decoration, but can contribute to making the environment more attractive.
- the public toilet can also be used by stray dogs and cats, with obvious benefit to public hygiene.
- to favour greater tolerance for dogs in the city.
- to simplify remarkably the job of removal of organic refuse.
- areas prohibiting entrance to dogs would be reopened, reviving the democratic right, also for residents who have a dog, to be able to circulate on all public land, above all for those people who try to guarantee themselves greater personal safety from ill-intentioned people by means of a dog.
- Municipalities backing tourism, besides giving a better image, would also provide a welcome service to their tourists.
- not requiring water or electrical hook ups, they can be positioned anywhere with little expense, also as what concerns consumption.
- they can be placed diffusely and therefore provide widespread service giving more guaranty of public hygiene.
- having been studied in consideration of urbanistic problems, they do not cause any impediment whatever in public space.
- the procedure adopted meets the necessities of the animals, for which repulsive attitudes towards the use are excluded.
- practical and hygienic use for the cleaning work for custodians of dogs.

### Brief Description of Drawings

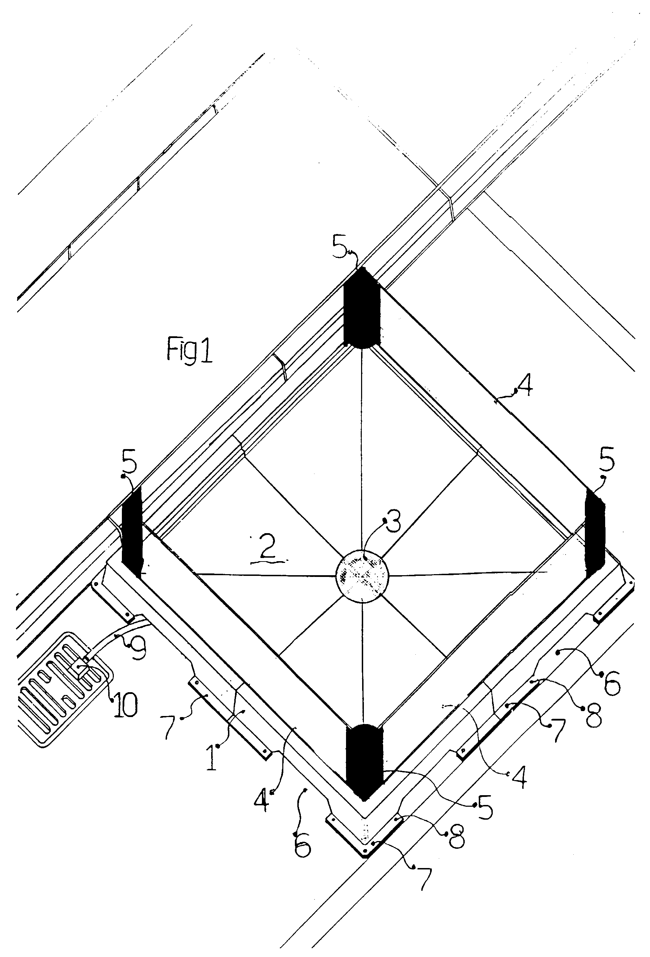

Figure 1 shows the dog toilet placed in a parking areas along a sidewalk.
Point 1: base of basin.
Point 2: inclined bottom.
Point 3: drainage hole with anti-obturating gridiron.
Point 4: gravel-guard panels.
Point 5: urinary pillars.
Point 6: openings for downflow of external water.
Point 7: external spacer feet.
Point 8: holes for bolting the basin to the ground.
Point 9: drainage tube.
Point 10: fastening pipe fitting to road drain well.
Point 11: line put into relief which indicates the optimal level of gravel.

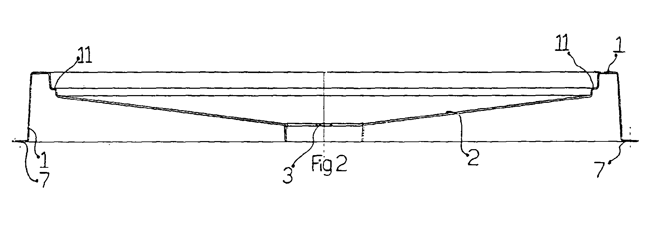

Figure 2 shows the central section of the dog toilet.

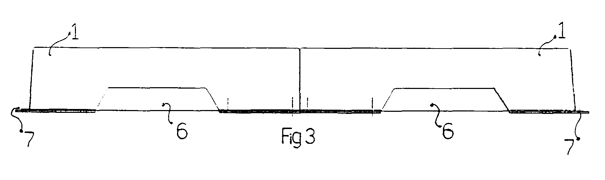

Figure 3 shows an external side view of the dog toilet.

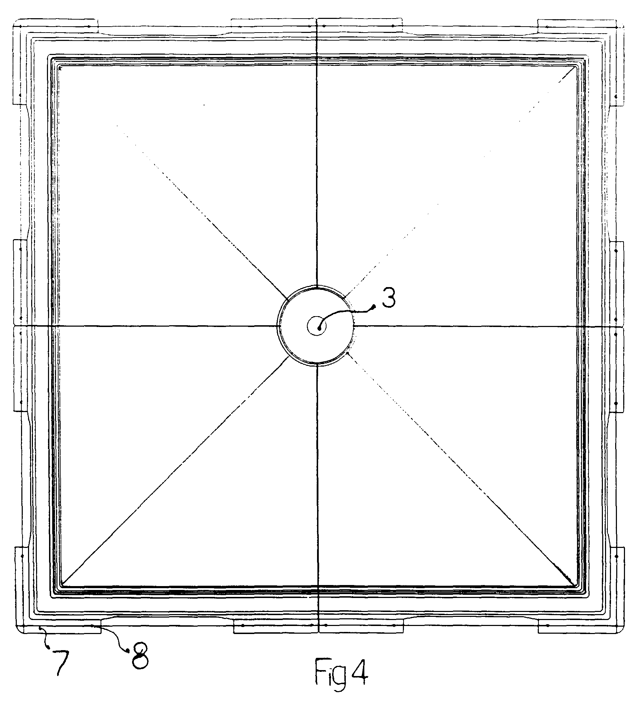

Figure 4 shows a top view to the dog toilet.

### Best way for carrying out the invention

Production of these basins will be carried out by means of a die and relative moulding. The procedure is the same for any material used: PVC polyethylene, fiberglass and any other suitable material.

## Claims

1. Toilet for dogs for public and private use, which does not require water or electrical hook ups and which can be positioned anywhere with little expense, said toilet being formed by a basin (1) in rigid, resistant and water-repellent material, said basin having an internal bottom (2) inclined towards a central hole (3) for drainage connected to a tube (9), which allows the waste liquids to flow to a system for collecting waste waters, **characterized in that** the central drainage hole (3) is protected by an anti-obturation gridiron, in that the tube (9) is connected to a disinfection filter (10), the end of which will be fixed to the system for collecting waste waters, in that the base of the toilet is provided with wide openings (6) end some spacer feet (7) so as not to obstruct or impede the downflow of rain, waste or street water into road drain wells whenever the toilet is placed near the latter, and in that the internal bottom (2) of the basin is filled with a fine gravel.

2. A dog toilet according to claim 1, characterised in that the toilet is made of a mono-element.

3. A dog toilet according to claim 1, characterised in that the toilet is made up of several modules which can be assembled.

4. A dog toilet according to anyone of claims 1 to 3, characterised in that the basin has an external height of about 25 cm.

5. A dog toilet according to anyone of claims 1 to 4, characterised in that one or more gravel-guard panels (4) are predisposed along its perimeter.

6. A dog toilet according to anyone of claims 1 to 5, characterised in that some pillars (5) are predisposed at the internal corners of the basin, in order to facilitate urinating of adult male dogs.

7. A dog toilet according to claim 6, characterised in that filters, periodically impregnated with a germicidal or bactericidal substance for greater hygiene, are placed on the drainage hole (3) and under the urinal pillars (5).

8. A dog toilet according to claim 5, characterised in that the base of the toilet has the colour and/or resemblance of material generally used in city decoration and that the gravel-guard panels (4) are decorated with floral arboreal objects such that the toilet has the appearance of a flower bed in blossom.

9. A dog toilet according to anyone of claims 1 to 8, characterised in that a dispensable is attached to the toilet, which includes a dustpan for lifting refuse and a waste container for throwing said refuse away in.

10. A dog toilet according to claim 9, characterised in that a little basin, containing disinfecting liquid, is attached to the waste container.

## Patentansprüche

1. Hundetoilette fur den privaaten und oeffentlichen Gebrauch, die keine Wasser-oder elektrische Verbindung braucht und die ueberall mit billigen Kosten aufgestellt sein kann. Sie besteht aus einem Behaelter (1) aus strengem, haltbarem und Wasserabstossedem Stoff, dessen inneren Boden (2) nach einem zentralgelegenem Loch fuer Entwasserung (3) geneigt ist. Der Loch fuer Entwasserung ist mit einem Rohr (9) verbunden, so dass der Harn in den besonderen ReinigungsAnlagen geleitet sein kann. Sie besteht aus einem zentralgelegenem Loch fuer Entwasserung (3) vor einem Sieb bescheutzt und aus einem Rohr (9) in Verbindung mit einem entkeimenden Filter (10), dessen Ende durch die Oeffnungen (6) des Bodens der Toilette auf der ReinigungsAnlagen festgelegen ist. Der Boden der Toilette hat auch aussere distazierenden Fuessen (7) um den Fluss des Regeln, WaschungsWasser nach den Schachten nicht zu hindern. Der innere Boden (2) ist auch mit besonderer Kies ueberzogen.

2. Hundetoilette nach Anspruch 1 dadurch gekennzeichnet, die aus einem Bestandteil besteht.

3. Hundetoilette nach Anspruch 1 dadurch gekennzeichnet, dass ihre Teilen angesammelt sein koennen.

4. Hundetoilette nach Anspruch vom 1 bis 3 dadurch gekennzeicht, dass sie eine aussere Hoehe von 25 Zentimeter.

5. Hundetoilette nach Anspruch vom 1 bis 4 dadurch gekennzeichnet, dass sie ein oder mehere Tuchen (5) auf ihrem Perimeter hat, so dass das Kies nicht ausstroemen kann.

6. Hundetoilette nach Anspruch vom 1 bis 5 dadurch gekennzeichnet, die einige Saeulen (5) auf die innere Ecken des Bahaelter hat, um das Harnen der erwachsenen maennchen Hunden einfacher zu machen.

7. Hundetoilette nach anspruch 6 dadurch gekennzeichnet, die einige Filter mit Disinfektionsmittel inpraegniert hat, die auf dem zentralen Loch (3) und auf die Saeulen (5) gelegen sind.

8. Hundetoilette nach Anspruch 5 dadurch gekennzeichnet, dass der Behaelter die Farbe oder das Aussehen der Pflasterung hat und die Tuchen (4) mit Blumen gezeichnet sind.

9. Hundetoilette nach Anspruch vom 1 bis 8 dadurch gekennzeichnet, dass die Hundetoilette ein Spuelsystem aufweist mit der Toilette verbunden, die eine kleine Schaufel und ein Tank um die Faekalien aufzuheben und wegzuwerfen.

10. Hundetoilette nach Anspruch 9 dadurch gekennzeichnet, die aus einer kleinen Bahaelter mit Disinfektionsmittel und mit ReinigungsAnlage verbinden.

## Revendications

1. Lieu d'aisance pour chiens déstiné à une utilisation soit publique soit privée qui ne demande aucun branchement hydrique ou électrique, peut etre placé partout avec peu de charges et il est costitué par un bac (1) en matériel rigide, résistant et hydrofuge avec le fond interne (2) incliné vers un trou central de drénage (3) relié à un tuyau (9) pour canaliser les décharges dans les installations de ramassage, caractérisé par un trou central de drainage (3) protégé d'une grille anti-obturation, par un tuyau (9) relié à un filtre disinfectant (10) dont le terminal sera fixé sur l'installation de ramassage des décharges, par une base qui est pourvue de larges ouvertures (6) avec de petits pieds externes espacés (7) pour ne pas obstruer ni entraver les eaux de pluie, de lavage ou de la rue vers les bouches d'égout au cas où les lieux d'aisances seraient placées près d'elles, et par le fond interne (2) du bac recouvert de gravie.

2. Lieu d'aisance pour chiens selon la révéndication 1, caractérisé par le fait que le lieu d'aisance est constitué d'un seul élément.

3. Lieu d'aisance pour chiens selon la révéndication 1, caractérisé du fait que le lieu d'aisance est composé de plusieurs éléments qui peuvent etre assemblés.

4. Lieu d'aisance pour chiens selon les révéndications de 1 à 3, caractérisé par un bac ayant une hauteur externe d'environ 25 centimètres.

5. Lieu d'aisance pour chiens selon les révéndications de 1 à 4, caractérisé par un ou plusieurs panneaux pare-gravier (4) qui sont prédisposés le long de son périmètre.

6. Lieu d'aisance pour chiens selon les révéndications de 1 à 5, caractérisé par quelques colonnes (5) qui sont prédisposées aux angles internes du bac, afin de faciliter l'emission d'urine des chiens males adultes.

7. Lieu d'aisance pour chiens selon la révéndication 6, caractérisé par des filtres périodiquement imprégnés de subastances germicides et bactéricides pour garantir l'hygiène, qui sont placés sur le trou de drainage (3) et sous les colonnes urinaires (5).

8. Lieu d'aisance pour chiens selon la révéndication 5, caractérisé par la base du bac qui présente les couleurs et/ou les apparences des matériels utilisés habituellement dans les décors urbains et par des panneaux pare-gravier (4) décorés avec des sujets d'arbres et de fleurs, ainsi que le lieu d'aisance apparait comme un parterre fleuri.

9. Lieu d'aisance pour chiens selon les révéndications de 1 à 8 , caractérisé par un système de nettoyage relié au lieu d'aisance qui comprend une pelle, pour le ramassage des déchets et un récipient où les jeter.

10. Lieu d'aisance pour chiens selon la révéndication 9, caractérisé par une petite cuvette qui contient du liquide disinfectant, relié au contener des déchets.
